# EUROPEAN PATENT APPLICATION

(11) **EP 4 704 019 A1**
(43) Date of publication of application: **04.03.2026**
(21) Application number: 25199035.4
(22) Date of filing: 29.08.2025
(51) Int. Cl.: G06Q 30/0601

(54) **METHOD AND SYSTEM COMPRISING A COMBINATION OF LARGE LANGUAGE MODELS AND A CONSTRAINT ENGINE**

(30) Priority: 29.08.2024 EP 24197415
(71) Applicant: Siemens Aktiengesellschaft, 80333 München (DE)
(72) Inventor: Kogler, Philipp, 9433 Sankt Andrä (AT); Chen, Wei, 1140 Vienna (AT); Falkner, Andreas, 1140 Wien (AT); Haselböck, Alois, 3394 Schönbühel-Aggsbach (AT); Wallner, Stefan, 1020 Wien (AT)
(74) Representative: Siemens Patent Attorneys

(57) **Abstract**

The present disclosure provides a method for generating a product configuration. The method includes receiving a natural-language description of product requirements from a user (102), translating the natural-language description (104) to constraints using a formalizer (108) that includes a large language model, determining a product configuration (120) that satisfies the constraints and predefined product line constraints using a configuration engine (118) that includes a constraint solver, and generating a natural-language description of the product configuration (126) using an interpreter (124) that includes a large language model. The disclosure further provides a system for generating a product configuration that includes the formalizer (108), the configuration engine (118), and the interpreter (124). Additionally provided are a device for planning and manufacturing a product based on the product configuration and a computer program product for performing the method.

## Description

The invention relates to a method comprising a combination of Large Language Models and a constraint engine and a corresponding system, a device, a computer program product, and a computer-readable medium.

Highly customizable technical products, such as a metro wagon or a compressor system, are typically tailored to specific customer needs by selecting and assembling various components and options. A product configurator is an interactive software system that enables this configuration of a product while satisfying technical limitations and restrictions of the concrete domain and product line. Product configurators typically provide a graphical user interface (GUI) that is specifically designed for each product and targeted user group. The GUI reflects the high complexity of the technical product that is being configured, and its use is often not self-explanatory for non-expert users due to the large number of technical parameters.

A technical product is typically configured in a graphical user interface. The need for a custom implementation for each product line and user group results in additional development efforts.

Extending or substituting graphical user interfaces for the configuration of a technical with chat-like natural-language interactions using advances in generative Al technologies (i.e. large language models, ChatGPT, etc.) has recently gained attention. However, directly applying generative Al in this context is subject to fundamental limitations:
1. Pre-trained general-purpose solutions typically do not have sufficient knowledge of the highly specific technical product, its components, variants, or parameters, and
2. the intrinsically unreliably output generation ("hallucination") does not provide any correctness guarantees regarding the technical feasibility of the configured product.

Related publications are Liangming Pan, Alon Albalak, Xinyi Wang, and William Wang. 2023. Logic-LM: Empowering Large Language Models with Symbolic Solvers for Faithful Logical Reasoning, in: Findings of the Association for Computational Linguistics, EMNLP 2023, pages 3806-3824, Singapore. Association for Computational Linguistics*.* and G. Poesia, A. Polozov, V. Le, A. Tiwari, G. Soares, C. Meek, S. Gulwani, Synchromesh: Reliable code generation from pre-trained language models, in: The Tenth International Conference on Learning Representations, ICLR 2022, Virtual Event, April 25-29, 2022, OpenReview.net, 2022*.*

The following challenges and problems arise in technical product configurators:
1. A GUI needs to be designed for each product and targeted user group, and
2. domain knowledge is often required to use the product configurator.

These limitations can impede the development of a product configurator and prevent non-experts from the effective configuration of the product.

It is an object of the invention to disclose a method and a system which enable to use a product configurator without a product-specific GUI and which is easier to use for non-expert users.

The present invention relates to a method for generating a product configuration using a combination of large language models and a constraint engine, a system for generating a product configuration, a device for planning and/or manufacturing a product, a computer program product, and a computer-readable medium. Embodiments of the invention are explained in more detail with reference to drawing.

The invention relates to a method as generally described herein for generating a product configuration. The method comprises a combination of Large Language Models and a constraint engine. The method or the system can be described as configuration copilot. The invention is based on integrating Large Language Models and Constraints.

The invention further relates to a system as generally described herein for generating a product configuration. The system comprises a combination of Large Language Models and a constraint engine.

The invention further relates to a device for planning and/or manufacturing a product based on a product configuration generated according to the method of the invention.

The invention further relates to a computer program product comprising a computer program directly loadable into a memory unit of a control unit of a system, comprising program elements to perform the steps of a method according to the invention when the computer program is executed in the control unit of the system.

The invention further relates to a computer-readable medium having stored thereon program elements readable and executable by a computer unit to perform the steps of a method according to the invention when the program elements are executed by the system.

The invention relates to a method for generating a product configuration. The method comprises receiving a natural-language description of product requirements from a user, translating, using a formalizer comprising a large language model, the natural-language description to constraints, determining, using a configuration engine comprising a constraint solver, a product configuration that satisfies the constraints and predefined product line constraints, and generating, using an interpreter comprising a large language model, a natural-language description of the product configuration. This method provides the advantage of enabling non-expert users to configure complex technical products without requiring specialized technical knowledge or domain expertise. The natural-language interface eliminates the need for product-specific graphical user interfaces, thereby streamlining the development process and reducing development costs. The integration of large language models with constraint solvers ensures technical feasibility while avoiding the hallucination problem inherent in direct LLM applications. The method can be implemented using various large language model architectures such as transformer-based models, and different constraint solving technologies including SAT solvers, CSP solvers, or mixed-integer programming solvers.

According to an aspect of the method, the formalizer translates the natural-language description to constraints in an intermediary JSON-based language, and the method further comprises transpiling the constraints from the intermediary JSON-based language to solver-specific constraints. This approach provides the advantage of decoupling the formalizer from the configuration engine, enabling interchangeability of different constraint languages and solvers. The use of JSON as an intermediary language leverages the fact that pre-trained LLMs have frequently encountered JSON during training, making the generation more reliable compared to less common constraint languages. This intermediary approach also provides more control over the expected output format and enables tailoring of language constructs to the specific task. Alternative implementations could include using XML, YAML, or other structured data formats as intermediary languages, or employing domain-specific languages tailored to particular product categories.

According to an aspect of the method, the formalizer utilizes few-shot prompting with a system prompt describing a product line and examples comprising pairs of natural-language inputs and expected outputs. This technique provides the advantage of effectively extending LLM capabilities with domain knowledge while requiring significantly less training data than fine-tuning approaches. The few-shot prompting approach enables rapid adaptation to new product lines without extensive retraining, reducing implementation time and computational costs. The system prompt provides essential context about product parameters and components, while the example pairs guide the LLM toward expected behavior patterns. Alternative implementations could include zero-shot prompting for simpler domains, fine-tuning approaches for highly specialized applications, or retrieval-augmented generation methods that dynamically select relevant examples from larger databases.

According to an aspect of the method, the configuration engine models the product line constraints and user constraints in a MiniZinc constraint language. This provides the advantage of leveraging a mature, standardized constraint modeling language that supports various solver backends and constraint types. MiniZinc enables expression of complex technical constraints including logical, arithmetic, and combinatorial relationships between product components. The declarative nature of constraint modeling allows for clear specification of product rules and limitations. Alternative implementations could utilize other constraint programming languages such as OPL, Essence, or domain-specific constraint languages, or employ different solving paradigms including answer set programming, satisfiability modulo theories, or optimization-based approaches.

According to an aspect of the method, the interpreter generates the natural-language description by evaluating which properties and components are most important to include based on importance hints in a product line definition and the original user input. This approach provides the advantage of generating context-aware explanations that prioritize information most relevant to the user's specific requirements. By emphasizing properties and components mentioned in the original user input, the interpreter creates more personalized and focused summaries that avoid overwhelming non-expert users with excessive technical details. The importance hints mechanism enables domain experts to guide the explanation generation toward the most critical aspects of each product line. Alternative implementations could include attention-based mechanisms for automatic importance detection, user preference learning systems that adapt over time, or multi-level explanation generation providing different levels of technical detail.

According to an aspect of the method, the natural-language description of product requirements is received via speech input converted using speech-to-text conversion tools. This provides the advantage of enabling hands-free operation and improving accessibility for users in mobile or industrial environments where typing may be impractical. Speech input can be particularly beneficial for field engineers or technicians who need to configure products while working with equipment. The speech interface can leverage state-of-the-art automatic speech recognition technologies to achieve high accuracy across different languages and accents. Alternative implementations could include multi-modal input combining speech with gesture recognition, voice activity detection for continuous interaction modes, or specialized acoustic models trained for technical vocabulary in specific domains.

According to an aspect of the method, the product comprises a highly customizable technical product selected from a metro wagon or a compressor system. This specification provides the advantage of addressing complex industrial applications where traditional configuration approaches face significant challenges due to the high number of interdependent parameters and technical constraints. Metro wagons and compressor systems represent examples of products with extensive customization options, strict safety and performance requirements, and complex component interactions that benefit from the combined LLM-constraint solver approach. Alternative product categories could include manufacturing equipment, building automation systems, automotive configurations, telecommunications infrastructure, or other engineered systems with high configurability and technical complexity.

According to an aspect of the method, the method further comprises enabling the user to interactively refine the product configuration. This provides the advantage of supporting iterative design processes where users can explore different configuration options and make incremental adjustments based on the system's feedback. Interactive refinement enables users to understand the implications of their choices and discover alternative solutions that better meet their requirements. The conversational nature of the interaction makes the configuration process more intuitive and user-friendly compared to traditional form-based interfaces. Alternative implementations could include guided refinement workflows that suggest specific improvement directions, constraint relaxation mechanisms for infeasible requirements, or multi-objective optimization interfaces that help users balance competing design goals.

According to an aspect of the method, the method enables configuration of a technical product without requiring a product-specific graphical user interface. This provides the significant advantage of eliminating the need for custom GUI development for each product line and user group, substantially reducing development time and costs. The natural-language interface provides a universal interaction paradigm that can be applied across different product categories without specialized interface design. This approach also improves maintainability since changes to product specifications do not require corresponding GUI modifications. Alternative implementations could include hybrid approaches combining natural language with simplified generic interfaces, voice-only interfaces for specific use cases, or adaptive interfaces that automatically generate appropriate visual elements based on the conversation context.

The method for generating a product configuration according to claim 1 provides substantial advantages over previous solutions by addressing fundamental limitations in both traditional GUI-based product configurators and direct application of large language models for product configuration.

Compared to conventional GUI-based product configurators, the invention eliminates the need for custom graphical user interface development for each product line and targeted user group. Traditional product configurators require specialized GUI design that reflects the high complexity of technical products being configured, resulting in significant additional development efforts and costs. The natural-language interface of the present invention provides a universal interaction paradigm that can be applied across different product categories without requiring specialized interface design knowledge or extensive development resources. This streamlines the development process of product configurators and substantially reduces both initial development time and ongoing maintenance costs.

The invention addresses the accessibility challenge faced by non-expert users when interacting with complex technical product configurators. Traditional GUI-based systems often require domain knowledge to effectively use the product configurator due to the large number of technical parameters and the non-self-explanatory nature of the interface. The natural-language interface of the present invention enables non-expert users to configure complex technical products without requiring specialized technical knowledge or domain expertise, thereby democratizing access to sophisticated product configuration capabilities.

Compared to direct application of large language models for product configuration, the invention overcomes critical reliability and accuracy limitations. Pre-trained general-purpose language models typically lack sufficient knowledge of highly specific technical products, their components, variants, and parameters. The invention addresses this limitation through the formalizer component that utilizes few-shot prompting with system prompts describing the product line and examples comprising pairs of natural-language inputs and expected outputs, effectively extending LLM capabilities with domain knowledge while requiring significantly less training data than fine-tuning approaches.

The invention solves the hallucination problem inherent in direct LLM applications by integrating a constraint solver that strictly ensures technical feasibility and generates valid product configurations regarding restrictions of the domain and product line. The intrinsically unreliable output generation of standalone LLMs cannot provide correctness guarantees regarding technical feasibility of configured products. The configuration engine comprising a constraint solver in the present invention evaluates whether constraints are satisfiable and returns configurations that meet both user requirements and predefined product line constraints, thereby providing reliability guarantees that are essential for technical product configuration.

The decoupling architecture of the invention provides significant flexibility advantages over existing solutions. The use of an intermediary JSON-based language between the formalizer and configuration engine enables interchangeability of different constraint languages and solvers without requiring modifications to the natural language processing components. This technology-agnostic approach allows the system to adapt to different constraint solving technologies and evolve with advances in both language models and constraint solving methods.

The interpreter component provides context-aware explanation capabilities that prioritize information most relevant to users' specific requirements. By evaluating which properties and components are most important to include based on importance hints in the product line definition and the original user input, the invention generates personalized summaries that avoid overwhelming non-expert users with excessive technical details while ensuring that critical information is communicated effectively.

The invention enables multimodal interaction capabilities, particularly through speech input converted using speech-to-text conversion tools. This provides hands-free operation advantages and improves accessibility for users in mobile or industrial environments where traditional keyboard input may be impractical, such as field engineers or technicians configuring products while working with equipment.

The interactive refinement capability of the invention supports iterative design processes where users can explore different configuration options and make incremental adjustments based on system feedback. This conversational approach makes the configuration process more intuitive and user-friendly compared to traditional form-based interfaces, enabling users to understand the implications of their choices and discover alternative solutions that better meet their requirements.

The invention addresses scalability challenges in product configurator development by providing a universal approach that can be applied to highly customizable technical products such as metro wagons or compressor systems without requiring product-specific interface development. This universality enables organizations to deploy configuration capabilities across multiple product lines with significantly reduced development overhead compared to traditional approaches that require custom implementation for each product and user group.

The invention further relates to a system for generating a product configuration, the system comprising a formalizer comprising a large language model configured to translate a natural-language description of product requirements to constraints, a configuration engine comprising a constraint solver configured to determine a product configuration that satisfies the constraints and predefined product line constraints, and an interpreter comprising a large language model configured to generate a natural-language description of the product configuration. This system addresses the same fundamental challenges in technical product configurators as described for the method, namely the need for custom GUI development for each product and user group, and the requirement for domain knowledge to effectively use product configurators. The system architecture provides a comprehensive solution that integrates multiple specialized components to overcome the limitations of both traditional GUI-based configurators and direct LLM applications. The modular design enables scalability and maintainability while ensuring technical feasibility through constraint solving. Alternative system implementations could include distributed architectures with cloud-based LLM services, edge computing deployments for industrial environments, or hybrid systems combining on-premises constraint solving with cloud-based natural language processing.

According to an aspect of the system, the formalizer and the configuration engine are decoupled using a technology-agnostic intermediary formal language. This decoupling provides significant architectural advantages by enabling independent evolution and optimization of the natural language processing and constraint solving components. The technology-agnostic approach allows the system to adapt to advances in either LLM technologies or constraint solving methods without requiring complete system redesign. This modularity facilitates maintenance, testing, and deployment of individual components while ensuring system-wide compatibility. The intermediary language serves as a stable interface contract between components, enabling different teams to work on different parts of the system simultaneously. Alternative implementations could include direct API-based communication between components, message queue-based asynchronous communication, or service mesh architectures for microservices deployment.

According to an aspect of the system, the interpreter provides a context-aware explanation that prioritizes properties and components mentioned in the user input and includes importance hints from a product line definition. This context-aware capability ensures that the system generates explanations tailored to the specific interests and requirements expressed by each user, rather than providing generic technical specifications. The prioritization mechanism helps non-expert users focus on the most relevant aspects of their configuration without being overwhelmed by comprehensive technical details. The importance hints mechanism enables domain experts to guide the explanation generation process toward the most critical aspects of each product line, ensuring that essential information is consistently communicated. This approach improves user comprehension and satisfaction while reducing the cognitive load associated with processing complex technical information. Alternative implementations could include machine learning-based importance scoring, user feedback loops for adaptive explanation generation, or multi-level explanation systems providing different levels of technical detail based on user expertise.

The invention further relates to a device for planning and/or manufacturing a product based on a product configuration generated according to the method. This device addresses the same technical challenges in product configuration as described for the method, enabling seamless integration of the configuration process with downstream planning and manufacturing operations. The device provides a complete solution that bridges the gap between customer requirements specification and actual product realization, ensuring that configured products can be effectively planned and manufactured according to the generated specifications. The integration capability eliminates potential inconsistencies between configuration and manufacturing processes while enabling real-time validation of manufacturability constraints. Alternative device implementations could include integrated CAD/CAM systems, manufacturing execution systems with embedded configuration capabilities, or loT-enabled manufacturing devices that receive configuration data directly from the configuration system.

The invention further relates to a computer program product comprising a computer program directly loadable into a memory unit of a control unit of a system, comprising program elements to perform the steps of the method when the computer program is executed in the control unit of the system. This computer program product addresses the same technical challenges in product configuration as described for the method, providing a software implementation that can be deployed across various computing environments and integrated with existing enterprise systems. The directly loadable nature ensures efficient deployment and execution while maintaining compatibility with different hardware platforms and operating systems. The program elements are structured to provide optimal performance for the computationally intensive tasks involved in natural language processing and constraint solving. Alternative implementations could include containerized applications for cloud deployment, web-based applications accessible through browsers, or mobile applications for field configuration scenarios.

The invention further relates to a computer-readable medium having stored thereon program elements readable and executable by a computer unit to perform the steps of the method when the program elements are executed by the system. This computer-readable medium addresses the same technical challenges in product configuration as described for the method, providing a distribution and storage mechanism that ensures reliable access to the configuration capabilities across different computing environments. The computer-readable format enables flexible deployment options while maintaining data integrity and security. The stored program elements are optimized for efficient execution and minimal resource consumption while providing full functionality of the configuration system. Alternative implementations could include cloud-based storage with streaming execution, distributed storage systems for high availability, or specialized storage formats optimized for machine learning model deployment.

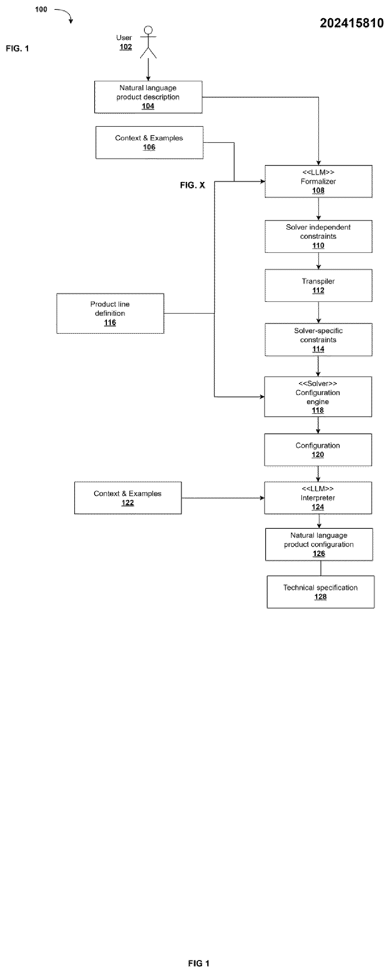

According to the invention, as further described below, the inventors propose a system architecture to combine large language models (LLMs) and a constraint engine for solving a configuration problem as shown in Fig. 1 which shows an architecture overview. A user 102 configures a product by providing a natural-language description 104 of their requirements. The Formalizer 108 is a specialized LLM-based component that translates the requirements to constraints. The Configuration Engine 118 is a constraint solver that attempts to find a configuration that satisfies the general constraints of the product line combined with the user constraints provided by the Formalizer. An Interpreter 124 translates the configuration back to natural language. The response is a natural-language description of the configured product accompanied by the full technical specification (product configuration as determined by the Configuration Engine). The user can then further refine the product configuration interactively.

In the following, some details about the main components of the architecture, the method, and the system are described.

The input to the Formalizer is a natural-language description of arbitrary product requirements provided by a non-expert. Utilizing the natural language processing capabilities of LLMs, the formalization can be viewed as a sequence-to-sequence translation task from natural language to a formal specification. The LLM is tasked with natural language understanding and the identification of corresponding parameters or components of the product (line).

Domain-customization and reliable output generation are addressed through few-shot prompting and algorithmic post-processing. Few-shot prompting has been shown to effectively extend the capabilities of LLMs with domain knowledge while requiring significantly less training data than fine-tuning. Knowledge of the product line is incorporated through a system prompt describing the product line with its parameters and components. A small set of examples is appended as pairs of natural-language inputs and expected outputs to provide the LLM with more context and guide it towards the expected behavior.

Rather than generating output directly in a specific constraint language, an intermediary JSON-based language is used, which can then be easily transpiled. As JSON is widely used, pre-trained LLMs have more often encountered JSON than less common constraint languages. Therefore, the generation of an intermediary JSON output is closer to the LLMs capabilities. Additionally, an intermediary language gives more control over the expected output as available language constructs can be constrained and tailored to the specific task. It also decouples the Formalizer from the Configuration Engine by enabling interchangeability of the concrete constraint language.

Given the user constraints combined with the complete product line definition, the Configuration Engine evaluates whether the constraints are satisfiable and returns a configuration. The product line as well as the user constraints are preferably modelled in the MiniZinc constraint language. The solver returns the full product configuration as a list of variable assignments which serves as an input to the Interpreter. In this context, the constraint solver is a given technology.

The Interpreter is an LLM module that explains the product configuration found by the Configuration Engine. The goal is to provide the user with a less technical summary that is understandable for non-experts.

Structured few-shot prompting is sufficient for this use-case as LLMs generally perform well in the translation from a formal specification to a natural-language summary as all facts are directly present in the prompt. The context given to the LLM consists of three aspects: The product line definition, instructions, and examples. The LLM is prompted to evaluate which properties and components are most important to be included in the summary. This is achieved by adding importance hints to the product line definition, and by appending the original user input. Properties and components mentioned directly in the user input are given more importance and are more likely to be included in the summary. The result is a more natural context-aware explanation of the most relevant aspects in the product configuration.

While the use of LLMs has been studied in various application fields, the application of LLMs in the context of technical product configuration has, to the best our knowledge, not been done before, especially:
- The natural-language module (LLM) and the configuration module ("Configuration Engine") are decoupled using a technology-agnostic intermediary formal language.
- Non-expert users are further supported by providing a relevant summary in addition to the full and complex product configuration. This is achieved by adding importance hints to the product line definition, and by giving more importance to properties and components mentioned directly in the user input.

Compared to conventional GUI-based productor configurators, the invention can streamline the development of a product configurator as no product-specific GUI needs to be developed and enables non-expert users to configure a complex technical product without technical knowledge.

Compared to directly using a LLM for product configuration, the invention can strictly ensure technical feasibility and a valid product configuration regarding restrictions of the domain and product line, and therefore solves the hallucination problem for these aspects.

The approach additionally enables the configuration of a technical product via speech input. State-of-the-art speech-to-text conversion tools can be used to generate the input prompt for our LLM-based Formalizer. This can be especially beneficial for mobile devices.

FIG. 1 shows a block diagram of a method for generating a product configuration according to aspects of the present disclosure.

FIG. 1 shows a comprehensive method 100 for generating a product configuration that enables users to specify product requirements using natural language input and receive both natural language and technical outputs. The method begins with a User 102 providing a Natural language product description 104, which serves as the initial input to the system. This natural language input is processed by a Formalizer 108, which comprises a large language model (LLM) that interprets the user's requirements.

The Formalizer 108 receives additional input in the form of Context & Examples 106, which provide contextual information and sample data to improve the accuracy of the natural language processing. The Formalizer 108 translates the natural language product description into Solver independent constraints 110, creating a standardized representation of the user's requirements that can be processed by various constraint solving systems.

The Solver independent constraints 110 are then processed by a Transpiler 112, which converts these generic constraints into Solver-specific constraints 114. This transpilation step ensures compatibility with the particular constraint solver being used in the system. The Solver-specific constraints 114 are fed into a Configuration engine 118, which comprises a constraint solver designed to process these formal constraints.

The Configuration engine 118 also receives input from a Product line definition 116, which contains the available product options, features, and their relationships within the product line. By combining the Solver-specific constraints 114 with the Product line definition 116, the Configuration engine 118 generates a Configuration 120 that satisfies the user's requirements while adhering to the product line constraints.

The Configuration 120 is subsequently processed by an Interpreter 124, which also comprises a large language model. The Interpreter 124 receives additional Context & Examples 122 to enhance its interpretation capabilities. The Interpreter 124 produces two distinct outputs: a Natural language product configuration 126 that presents the configuration in user-friendly language, and a Technical specification 128 that provides detailed technical parameters and specifications for implementation purposes.

This method 100 creates a bidirectional translation system that allows users without specialized technical knowledge to interact with complex product configuration systems through natural language interfaces while still generating precise technical specifications for manufacturing or implementation.

Although the invention has been further illustrated in detail by the preferred embodiments, the invention is not limited by the disclosed examples and other variations may be derived therefrom by those skilled in the art without departing from the scope of protection of the invention.

*Independent of the grammatical term usage, individuals with male, female or other gender identities are included within the term.*

### List of Reference

100 method
102 User
104 Natural language product description
106 Context & Examples
108 Formalizer
110 Solver independent constraints
112 Transpiler
114 Solver-specific constraints
116 Product line definition
118 Configuration engine
120 Configuration
122 Context & Examples
124 Interpreter
126 Natural language product configuration
128 Technical specification

## Claims

1. A computer-implemented method (100) for generating a product configuration, the method comprising:
receiving a natural-language description (104) of product requirements from a user (102);
translating, using a formalizer (108) comprising a large language model, the natural-language description to constraints (110);
determining, using a configuration engine (118) comprising a constraint solver, a product configuration (120) that satisfies the constraints and predefined product line constraints (116); and
generating, using an interpreter (124) comprising a large language model, a natural-language description (126) of the product configuration.

2. The method of claim 1, wherein the formalizer (108) translates the natural-language description (104) to constraints (110) in an intermediary JSON-based language, and further comprising transpiling the constraints from the intermediary JSON-based language to solver-specific constraints (114).

3. The method of claim 1 or 2, wherein the formalizer (108) utilizes few-shot prompting with a system prompt describing a product line and examples comprising pairs of natural-language inputs and expected outputs.

4. The method of any one of claims 1 to 3, wherein the configuration engine (118) models the product line constraints (116) and user constraints in a MiniZinc constraint language.

5. The method of any one of claims 1 to 4, wherein the interpreter (124) generates the natural-language description (126) by evaluating which properties and components are most important to include based on importance hints in a product line definition (116) and the original user input (104).

6. The method of any one of claims 1 to 5, wherein the natural-language description (104) of product requirements is received via speech input converted using speech-to-text conversion tools.

7. The method of any one of claims 1 to 6, wherein the product comprises a highly customizable technical product selected from a metro wagon or a compressor system.

8. The method of any one of claims 1 to 7, further comprising enabling the user (102) to interactively refine the product configuration (120).

9. The method of any one of claims 1 to 8, wherein the method enables configuration of a technical product without requiring a product-specific graphical user interface.

10. A system for generating a product configuration, the system comprising:
a formalizer (108) comprising a large language model configured to translate a natural-language description (104) of product requirements to constraints (110);
a configuration engine (118) comprising a constraint solver configured to determine a product configuration (120) that satisfies the constraints and predefined product line constraints (116); and
an interpreter (124) comprising a large language model configured to generate a natural-language description (126) of the product configuration.

11. The system of claim 10, wherein the formalizer (108) and the configuration engine (118) are decoupled using a technology-agnostic intermediary formal language.

12. The system of claim 10 or 11, wherein the interpreter (124) provides a context-aware explanation that prioritizes properties and components mentioned in the user input (104) and includes importance hints from a product line definition (116).

13. A device for planning and/or manufacturing a product based on a product configuration generated according to the method of any of the claims 1 to 9.

14. A computer program product comprising a computer program directly loadable into a memory unit of a control unit of a system, comprising program elements to perform the steps of the method according to any of the claims 1 to 9 when the computer program is executed in the control unit of the system.

15. A computer-readable medium having stored thereon program elements readable and executable by a computer unit to perform the steps of the method according to any of the claims 1 to 9 when the program elements are executed by the system.
